# EUROPEAN PATENT APPLICATION

(11) **EP 1 705 138 A1**
(43) Date of publication of application: **27.09.2006**
(21) Application number: 06005692.6
(22) Date of filing: 21.03.2006
(51) Int. Cl.: B65G 47/28, B65G 47/84

(54) **Device for forming groups of articles**

(30) Priority: 25.03.2005 IT MI20050514
(71) Applicant: ILAPAK Research & Development S.A., CH-6926 Montagnola (CH)
(72) Inventor: Scheid, Manfred, 40789 Monheim (DE)
(74) Representative: Faraggiana, Vittorio

(57) **Abstract**

A collecting device of products intended to be subsequently packaged comprising a first inlet conveyor (12) of the products and a second collecting conveyor (13) of the products that during use receives the products from the first conveyor, characterised in that the collecting conveyor has a portion (60) of the conveying path thereof of the products superimposed on a portion of the conveying path of the inlet conveyor (12) so that the products are normally integral with the first conveyor in the superimposed portion, the collecting conveyor (13) having a plurality of positioning elements (14a, 14b) of the products suitable for making said products integral with the collecting conveyor. The positioning elements are movable with respect to the collecting conveyor between an operating position at the conveying path of the products and a non-operating position retracted from said conveying path and being provided with driving means for driving the positioning elements to move them cyclically upon command between the operating position and the non-operating position.

## Description

The present invention relates to a collecting device of products, particularly suitable for being used on a packaging line, for example for collecting food products.

In the packaging field, devices are known that are suitable for collecting products in an orderly manner that are conveyed to the inlet of the device in a disorderly and irregular sequence, for example for preparing orderly groups of products to be packaged in a sole package.

Such devices comprise a first inlet belt conveyor, circulating in a continuous manner, which supplies products to a second belt conveyor, circulating intermittently and partially superimposed on the first one. The second conveyor has a plurality of positioning elements fixed perpendicularly to the belt to be able to protrude during use onto the conveying path of the products. These elements have the function of immobilising the products on the belt to collect them in an orderly manner.

The second conveyor is driven by pulleys that are movable to vary the extent of the superimposed portion of the two conveyors; whenever a product arrives from the inlet conveyor, the extent of the superimposed portion is lengthened by a step to make a new positioning element protrude on the conveying path so as to collect the products that thus remain interposed between subsequent positioning elements.

After receiving a preset number of products, the second conveyor conveys the products collected downstream of the superimposed portion to the first conveyor, where the products collected in an orderly manner can undergo other operations (for example, the products can be sent to subsequent packaging stations). After the advancing step of the second conveyor, the collection of the products restarts as disclosed previously.

The movable pulleys system is, however, costly to make and has rather a complicated and complex mechanism, so that frequent maintenance is necessary to guarantee the reliability thereof.

The general object of the present invention is to overcome the aforementioned drawbacks by providing a collecting device of products that is cheap, with a simple structure and that is reliable.

In view of this object it has been decided to make, according to the invention, a collecting device of products intended to be subsequently packaged comprising a first inlet conveyor of the products and a second collecting conveyor of the products that in use receives the products from the first conveyor, characterised in that the collecting conveyor has a portion of the conveying path thereof of the products superimposed on a portion of the conveying path of the inlet conveyor so that the products are normally integral with the first conveyor in the superimposed position, the collecting conveyor conveying a plurality of positioning elements of the products suitable for making the products integral with the collecting conveyor, the elements being movable with respect to the collecting conveyor between an operating position at the conveying path of the products and a non-operating position retracted from said conveying path, and being provided with driving means for driving the positioning elements to move them cyclically upon command between the operating position and the non-operating position.

In order to make the explanation of the innovative principles of the present invention and the advantages thereof with respect to the known art clearer, with the help of the attached drawings a possible embodiment applying these principles will be disclosed below. In the drawings:
- figure 1 is a perspective view of a collecting device of products made according to the invention,
- figure 2 is a longitudinal vertical section view of the device in figure 1,
- figure 3 is an enlargement of figure 2,
- figure 4 is a cross-section view along the plane IV-IV shown in figure 3,
- figure 5 is a schematic view of an advancing sequence of the conveyors during operation,
- figure 6 is a view of an alternative embodiment of the device according to the invention,
- figure 7 is a further view of an alternative embodiment of the device.

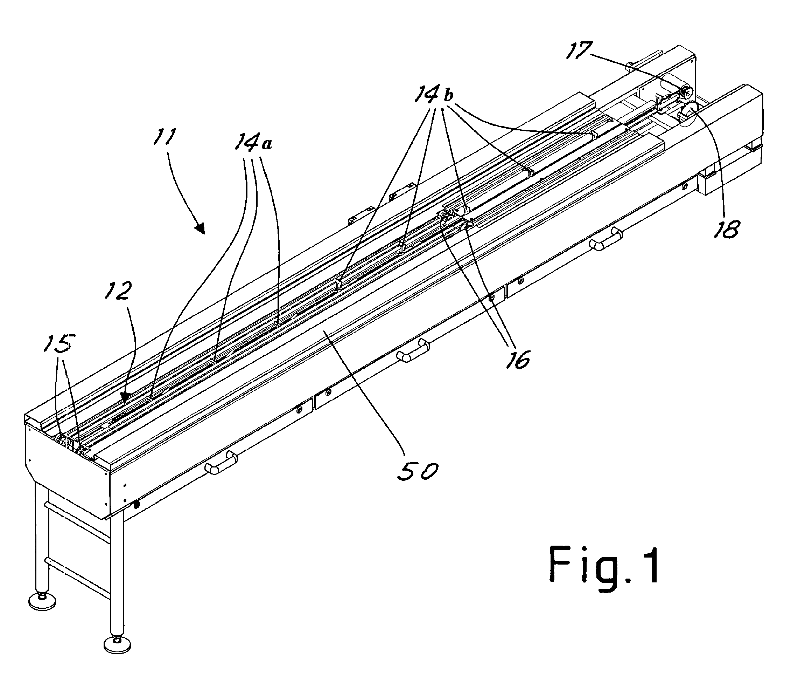

With reference to the figures, in figure 1 there is shown a collecting device 11, for example intended to be used in a packaging line for ordering the positioning in groups of food products before they are packaged.

The device 11 comprises a frame 50 inside which there are arranged an inlet conveyor 12 and a collecting conveyor 13 that in use receives the products conveyed by the conveyor 12. The two conveyors circulate in the direction indicated by the arrow 80. The products 19 could be supplied to the inlet conveyor directly from a production line.

Advantageously, the conveyors are "circulating", i.e. of the chain, belt, strap or similar type. In the particular case of the preferred embodiment, the inlet conveyor 12 is a chain conveyor provided with two chains that run longitudinally to the device along two channels 41 (shown in figure 1). The chains of the conveyor 12 are dragged by the motor-driven gear wheel 21 and are driven by the gear wheels 15, 16, 20 and 22 arranged so as to have an upper branch that defines a conveying path of the products that is almost horizontal and straight.

The collecting conveyor 13 is advantageously a chain conveyor and comprises a dragging gear wheel 18 and two driving wheels 17 and 31, arranged so that the upper branch of the chain of the conveyor is arranged almost horizontally.

The collecting conveyor 13 has a portion 60 of the conveying path thereof superimposed on the conveying path of the inlet conveyor 12 so that the products 19 are normally integral with the conveyor 12 at the portion 60. In the embodiment shown in the figures, the upper branch of the chain 13 is arranged at a slightly lower height than the height of the belts 12, in such a way that the chain 13 does not interfere with the conveying of the products on the belt 12.

The conveyor 13 has a plurality of positioning elements 14a and 14b suitable in use for making the products 19 integral with the collecting conveyor 13 so as to collect them in a preset order.

The positioning elements 14, according to the invention, are moveable with respect to the chain of the collecting conveyor 13 between an operating position at the conveying path of the products (see the elements 14b that protrude above the belt of the conveyor 12) and a non-operating position retracted from the conveying path (see the elements 14a that are retracted below the conveying plane defined by the belt 12).

The elements 14 are advantageously spaced in a regular manner along the collecting conveyor 13.

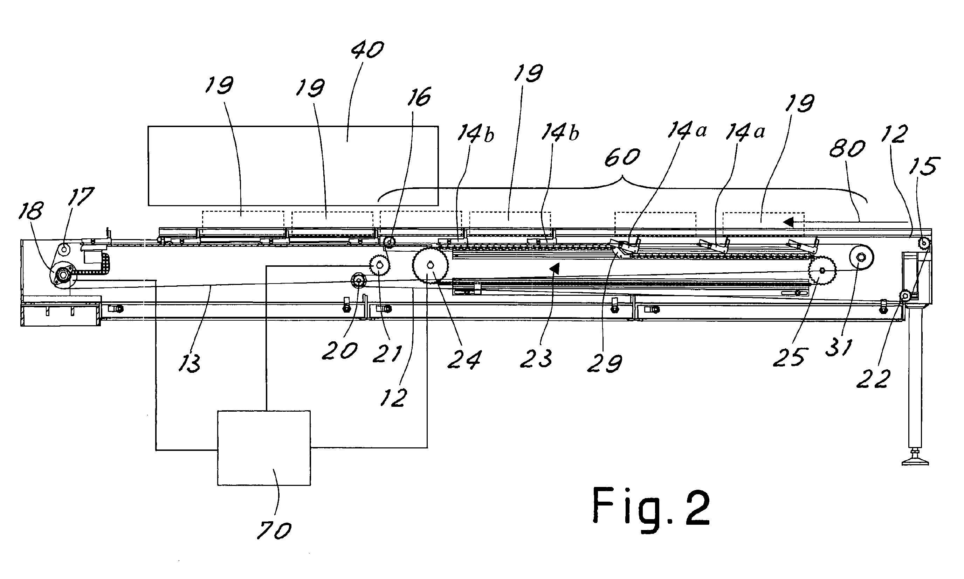

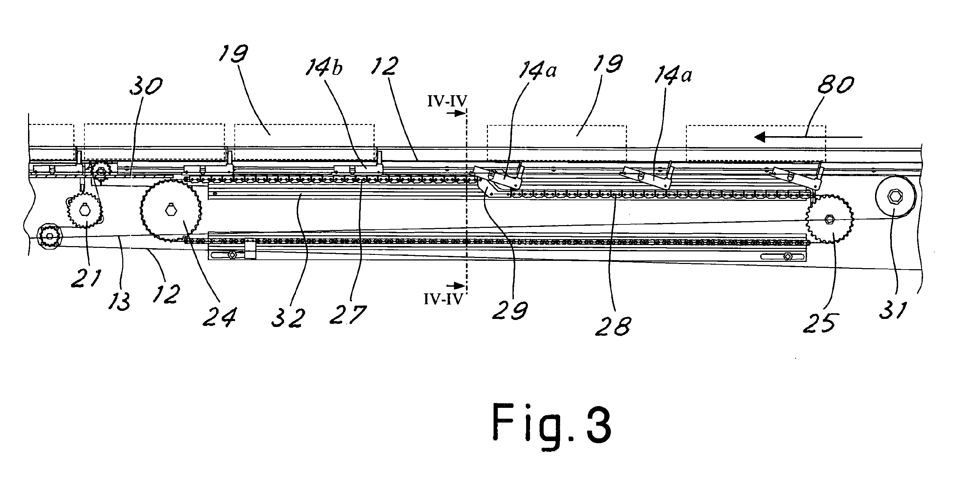

In the embodiment shown in figures 1 to 4 the passage of the positioning elements 14 from a non-operating position to an operating position is obtained through driving means 23. This means comprises a chain 27 dragged by the gear wheel 24 and driven by the wheel 25. On the upper branch of the chain 27, 28 a cam 29 is mounted that is slideable parallel to the conveyor 13 at the superimposed portion 60. The cam 29, by moving in a direction opposite the product conveying direction, pushes the positioning elements 14 from the non-operating position recessed under the conveyor conveying plane (like the elements 14a) to the operating position protruding at the conveying path (like the positioning elements 14b).

The products 19 are typically supplied in a disorderly manner and at inconstant distances between one another on the inlet conveyor 12 dragged with continuous circulation.

According to a first operating mode characterised by intermittent operation, the device 11 groups a preset number of products 19 to be transferred to a subsequent packaging station or another place. When the products reach the portion 60 of the collecting conveyor 13 one by one (that is rotated intermittently and remains stationary whilst it receives the products 19) suitable known sensors (not shown in the figures) detect the presence of a new product to be collected on the portion 60 and transmit the detected information to the controlling means 70. The controlling means 70, on the basis of the detected information received, commands driving means 23 of the elements 14 to take an extra positioning element 14 to the operating position each time that a product arrives resting on a positioning element that is already raised in the operating position. In this way, the products 19 remain separated from the elements 14 and spaced in a desired preset order. The controlling means 70 is well known to those skilled in the art and is not therefore disclosed in detail.

By way of example, it should be noted that the products 19 could have a width that is the same as the distance between successive positioning elements 14, so that once the products are collected they are adjacent to one another. Nevertheless, the distance between the elements 14 could also be varied at will, depending on the type of product or the desired manner of collecting.

When a preset number of products 19 has come to rest on the raised positioning elements 14b on the portion 60 (in the example in the figure, three products), the conveyor 13 is moved by a step (at a speed that is substantially greater than the conveying speed of the belt 12) and the three collected products 19 are carried downstream of the portion 60 at the height of the product evacuation station 40 (shown schematically in the figure). This station can be made according to known techniques and be used to send the well-ordered and collected products to a subsequent packaging station.

Whilst the collected products are transferred from the station 40 sequential collection of the products as previously disclosed can resume, with the conveyor 13 in a stationary condition.

Each element 14 is suitably hinged on a link in the chain 13 so as to rotate between the two positions through the action of the cam 29.

Downstream of the cam 29 in the conveying direction of the products the chain 27 is kept at a height such as to keep the element 14b in the operating position. Upstream of the cam, the chain 28 is at a lower height than the branch 27 of the chain so as no longer to supply a support to the elements 14 to keep them raised above the conveying plane. The elements 14, upstream of the cam 29 can therefore fall through cavity into the non-operating position retracted from the conveying path. The branches 27 and 28 are guided by two parallel horizontal guides 32, that are suitably staggered to keep them at the desired heights. Advantageously, the branches of the chain 27 and 28 are coated with a low-friction material to enable good sliding between the chain and positioning elements 14.

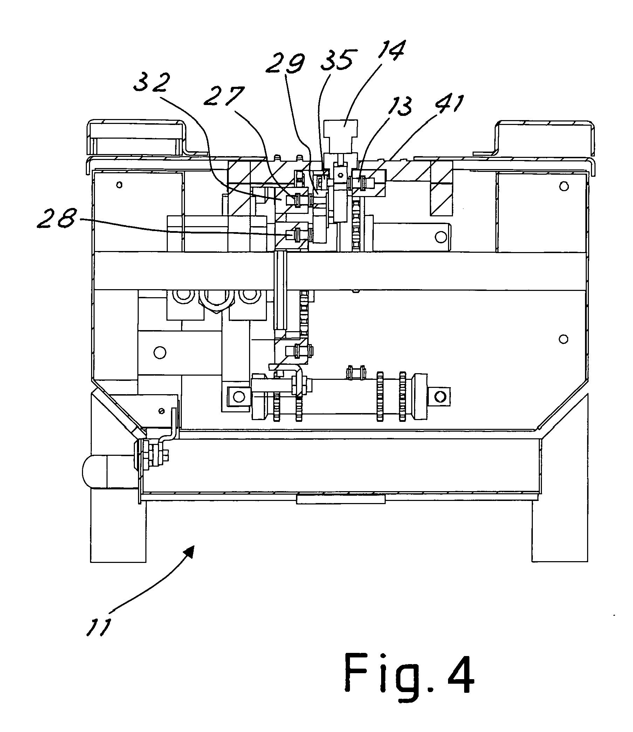

In figure 4 the pivot 35 is shown that protrudes from the element 14 that comes to rest on the cam 29 and on the chain 27 and 28 to control the movement between the operating position and the non-operating position.

Each time that a new product 19 is detected resting on an element 14 the controller 70 commands the motor (not shown) of the wheel 24 to make the cam 29 advance and make an element 14 rise so that the product remains jammed integral with the conveyor 13 between two positioning elements 14b.

When a preset number of collected products has been reached, as already said, the conveyor 13 is driven by taking the products outside the portion 60 and the cam 29 is made to retreat so that the elements 14 have all returned under the level of the conveying plane to permit a new orderly collecting cycle of products 19. It should be noted that downstream of the chain 27, at the height of the evacuating station 40, a support 30 is provided fixed to the frame that supports the positioning element in an operating position even in the absence of the support of the chain 27.

Advantageously, the belts of the conveyor 12 are arranged on opposite sides with respect to the positioning elements 14 and the conveyor 13.

The elements 14, in a preferred embodiment of the invention, are "L"-shaped and are hinged at an end of the "L". In the operating position the arm of the "L" on which the hinging is provided remains horizontal underneath the conveying plane (defined by the belt of the conveyor 12 and by suitable horizontal support walls fixed to the frame 50 at the evacuating station 40). It should nevertheless be noted that as an alternative this arm could also protrude above the belt 12 to support the product directly.

The positioning elements 14 are also arranged on the lower branch of the chain 13 of the collecting conveyor, although in the figure these elements are not shown for reasons of clarity.

According to a further operating mode of the device 11, characterised in this case by the need to operate in a continuous manner, for example in order to supply a typical packaging station of flexible film obtained from the reel, downstream of the conveyor 13 the products 19 have to be surrendered to a subsequent station in an orderly manner, at an equal distance from one another and in a continuous manner.

For the sake of greater clarity, the typical operating cycle will be disclosed below, reducing to the indispensable minimum the disclosure of the single elements that go to make up the device 11 and of the manner in which the latter operate in combination with one another in order to obtain the desired effects, inasmuch as the one carried out previously according to the intermittent operating mode is completely valid.

For the purposes of the disclosure, it is assumed that the conveyors 12 and 13 move at a speed that is appropriate to the required operation, the cam device 29 moves at the same speed and in the same direction as the conveyor 13 and, relatively to the latter, in a position such as to be subsequent with respect to the last positioning element 14b having a product 19 in front thereof and preceding the first element 14a.

When the products reach, one at a time, the portion 60 of the collecting conveyor 13 (which is driven continuously whilst it receives the products 19) suitable known sensors (not shown in the figures) detect the presence of a new product to be collected on the portion 60 and transmit the detected information to the controlling means 70. The controlling means 70, on the basis of the received detection, commands driving means 23 of the elements 14 to take an additional positioning element 14 sequentially to the operating position whenever a product goes past the position where the last element 14a is indicated below the level of the conveyor 12. The product 19, owing to the greater speed of the conveyor 12 with respect to the conveyor 13, comes to rest on the positioning element that is already raised in the operating position during a similar phase run on the occasion of the arrival of a previous product 19. In this way, the products 19 remain separated from the elements 14 and spaced apart in a desired preset order. The controlling means 70 is well known to those skilled in the art and will not therefore be disclosed in detail.

By way of example, it should be known that the positioning elements 14 could have a width the same as or slightly greater than the length of the package in which each product 19 could be released. Nevertheless, the distance between the elements 14 could also be varied at will, depending on the type of product or the collecting manner desired.

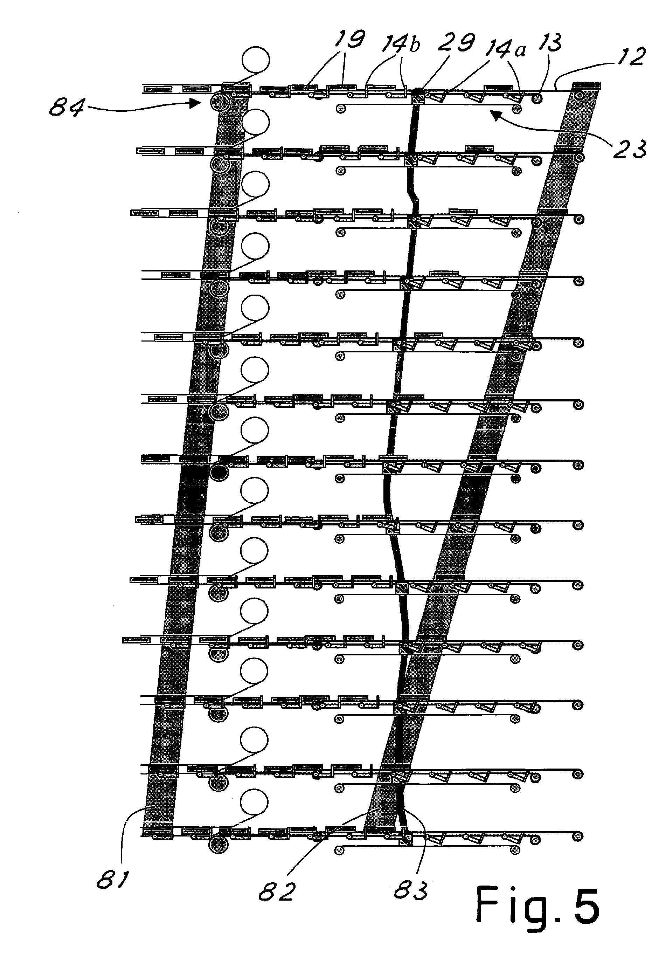

Figure 5 shows clearly the subsequent phases, in sequence, from top to bottom, of the operation disclosed above.

The trace 81 shows the advance of a product 19 dragged by the collecting conveyor 13 and, subsequently, by further product moving means of the packaging station 84 or by the tube constituted by the film in which the positioning elements 14b have released the product (that have a conveying speed the same, or less than that of the collecting conveyor 13). The trace 82 shows the advance of a product 19 that is integral with the inlet conveyor 12, that has a speed that is in all cases greater than that of the conveyor 13. The trace 83 shows the advance of the cam 29, controlled in such a way as to order the products as they accumulate on the conveyor 13.

As can be seen from the traces, the different speeds of the conveyors 12 and 13, together with the randomness with which the products arrive on the latter, constantly affect the position of the cam 29 with consequent continuous activation of the driving means 23. Naturally, if the position of the cam 29 should reach the end in the direction of the outlet of the products, the failure to arrive of other products must necessarily cause the stop of the conveyor 13 in such a way as not to have any positioning element without the respective product. If this peculiarity were not made necessary by the feature of the subsequent packaging station, the conveyor 13 could be kept constantly in motion.

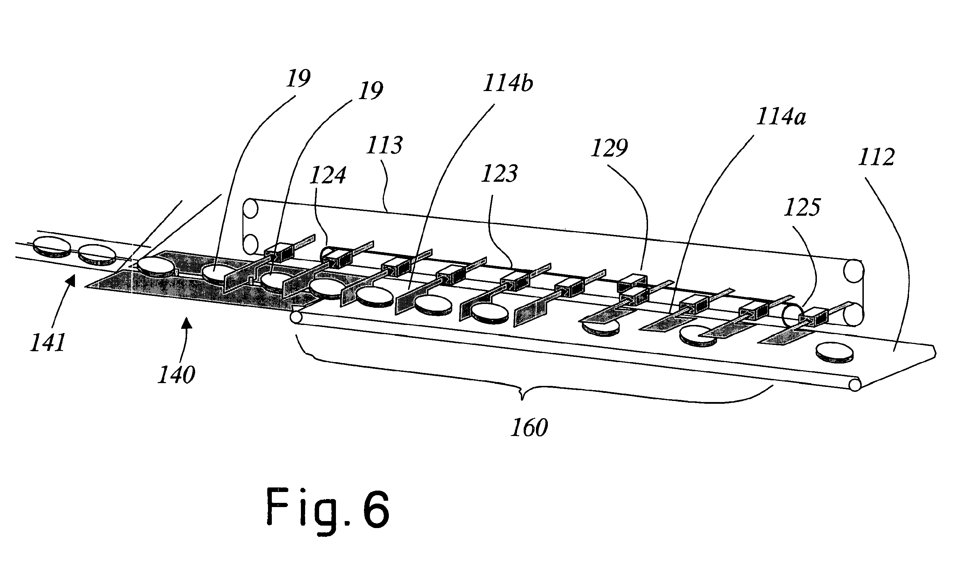

Figure 6 shows an alternative and equally advantageous constructional system according to which it is possible to obtain the same functionality as disclosed previously, but with undoubtedly superior features, both in terms of speed and of hygiene. The embodiment provides for the inlet conveyor 112 being constituted of a conveyor belt on which, along the common portion 160, the conveyor 113 acts that is positioned so that the positioning elements 119 are acting no longer from below, as previously, but from above. The cam device has been replaced by a device 129 having a similar function, thus able to move each element 114 from a non-operating position to an operating situation when it is traversed thereby. The device 129 is moved by a chain conveyor 123, similarly to the cam 29.

Equally, the presence of a lower belt 112 avoids the spaces that were on the other hand necessary in the embodiment disclosed previously, being thus more suitable for treating smaller, more fragile and more soilable products.

In the example of the figure, which must naturally be taken purely as an example, and which must not therefore be taken to be a limit to the scope of what is claimed herein, it is assumed that the positioning element 114, in order to move from a non-operating position 114a to an operating situation 114b and vice versa, rotates on the axis thereof and remains there until the end of the common portion 160, by means of a retention mechanism. Naturally, said mechanism could be replaced by a permanent magnet that is able to rotate the positioning element 114 on the basis of the magnetic repulsion action exerted in combination with an electromagnetic element present on the edge of the device 129, the latter element is activated or is not activated according to suitable functional criteria.

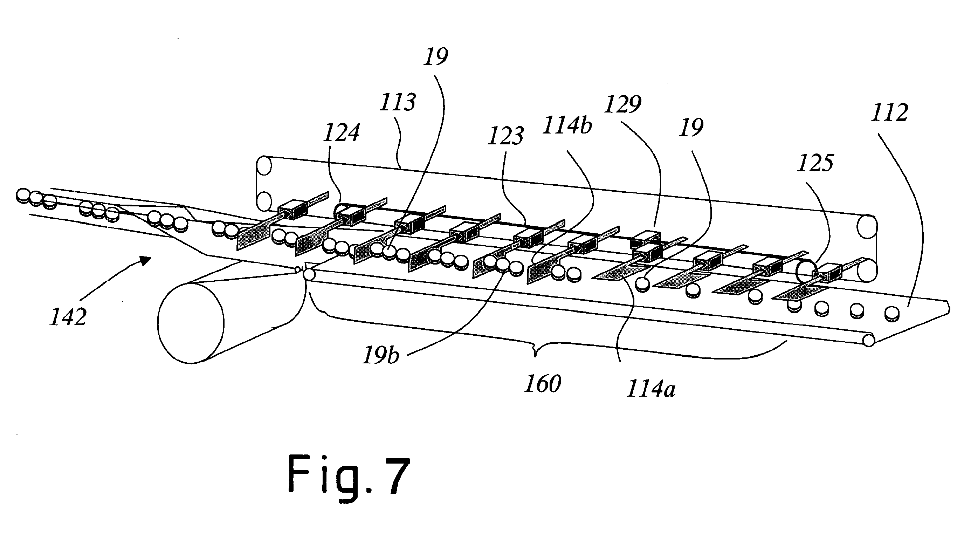

At the end of the conveyor 113 each positioning element 114b deposits the product 119 thereof in a subsequent intermediate station 140 suitable for serving and starting up the products in an orderly manner and collected at a subsequent packaging station 141, as shown in figure 6, or deposits it directly on the film at the inlet to the packaging station 142, as shown in figure 7. Both the intermediate station and the packaging station can be made according to known techniques.

Both the constructional embodiment disclosed in figure 1 and the one in figure 6, do not necessarily have to resort to the intermittent operation, disclosed previously, when they are intended to group a preset number of products. Through the nature thereof, they can collect flowing products in a disordered manner in order to convey them in an orderly manner, after forming the necessary quantity of products, to subsequent stations, which may need to operate in constant and constant motion.

According to what is shown in figure 7, the device conveys on the conveyor 112 and under the element 114a the number of products required by the package (in the disclosed example three products have to be consecutively released on the subsequent station), after which the device 129 makes the element 114a operative from which the last product has been conveyed. Previously, whilst waiting for the arrival of the last product to complete the preset quantity, the other products join the previous element 14b due to the greater speed of the conveyor 112. In this way, between each of the positioning elements 114b a finished product 19 is present. It is thus seen how a different quantity of products is obtainable to compose the groups 19 simply by modifying programming of the counting function of the products 19 without having to resort to any replacement of one or more mechanical parts of the device. Both the constructional forms proposed and shown here in figures 1 and 6, together with or without the presence of an intermediate station as shown in figures 6 and 7, enable the same functionality to be obtained. Solely for the sake of simplicity, in figure 7 the embodiment shown in figure 6 has been proposed again.

At this point it is clear how the objects of the invention have been reached. In particular, a collecting device and that is cheap and has a simple structure has been provided, having the driving pulleys of the conveyors fixed with respect to the frame of the machine. Furthermore, the possibilities of jamming and the need for maintenance have been minimised.

Naturally, the above disclosure of an embodiment applying the innovative principles of the present invention is given by way of example of these innovative principles and must not therefore be taken to limit what is claimed herein.

For example, the cam 29 could be replaced by a magnet, able to push upwards into the operating position the positioning element 14 (which is also provided with a suitable portion of magnetic material to establish magnetic repulsion interaction). The portion of chain 27 could in this case also be aligned on the portion 28 and be provided with magnets along the entire extent thereof to maintain the positioning elements 14 in the correct operating position.

Also the shape of the positioning elements does not necessarily have to be "L"-shaped, but could also be different.

## Claims

1. Collecting device of products intended to be subsequently packaged comprising a first inlet conveyor (12) of the products and a second collecting conveyor (13) of the products that in use receives the products from the first conveyor, **characterised in that** the collecting conveyor has a portion (60) of the conveying path thereof of the products superimposed on a portion of the conveying path of the inlet conveyor (12) so that the products are normally integral with the first conveyor in the superimposed portion, the collecting conveyor (13) having a plurality of positioning elements (14a, 14b) of the products suitable for making said products integral with the collecting conveyor, the elements being movable with respect to the collecting conveyor between an operating position at the conveying path of the products and a non-operating position retracted from said conveying path, and driving means (23) of the positioning elements (14) being provided to move them cyclically upon command between the operating position and the non-operating position.

2. Collecting device according to claim 1, **characterised in that** said driving means (23) comprises a cam (29) that is slideable along the superimposed portion (60) to push the positioning elements between the operating position and the non-operating position.

3. Collecting device according to claim 2, **characterised in that** said cam (29) is moved by a motor-driven chain (27, 28) that, downstream of the cam in the conveying direction of the products, is guided at a first height to support the positioning elements in the operating position and, upstream of the cam in the conveying direction of the products, it is guided at a second height in order not to interfere with the positioning elements.

4. Collecting device according to claim 1, **characterised in that** said driving means (23) of the positioning elements comprises a magnetic element slideable along the superimposed portion (60) to push the positioning elements (14) between the operating position and the non-operating position with magnetic interaction.

5. Collecting device according to claim 1, **characterised in that** the collecting conveyor (13) is a chain conveyor.

6. Collecting device according to claim 1, **characterised in that** the inlet conveyor (12) is a belt or chain conveyor.

7. Collecting device according to claim 5 and 6, **characterised in that** the inlet conveyor (12) comprises two chains arranged on opposite sides with respect to the positioning elements (14) of the collecting conveyor (13) at a greater height with respect to the chain of the collecting conveyor.

8. Collecting device according to claim 5, **characterised in that** said positioning elements (13) are hinged on the chain of the collecting conveyor to rotate between the operating position and the non-operating positioning.

9. Collecting device according to claim 8, **characterised in that** the positioning elements (14) are "L" shaped and are hinged at an end of the "L".

10. Collecting device according to claim 1, **characterised in that** said positioning elements (14) are spaced regularly along the collecting conveyor (13).

11. Collecting device according to claim 1, **characterised in that** said positioning elements (14) are retracted below the conveying path of the products when they are in the non-operating position.

12. Collecting device according to claim 1, **characterised in that** it comprises controlling means (70) for controlling the driving means (23) of the positioning elements (14) and the movement of the two conveyors.

13. Collecting device according to claim 12, **characterised in that** it comprises sensors for providing a signal relating to the position of the products to be collected on the superimposed portion (60) of the controlling means, which controls the driving means for driving the positioning elements on the basis of said signal.

14. Collecting device according to claim 1, **characterised in that** it comprises an evacuating station of the products collected at the collecting conveyor downstream of the superimposed portion in the conveying direction of the products.

15. Collecting device according to claim 1, **characterised in that** the inlet conveyor (12) circulates with continuous motion.

16. Collecting device according to claim 1, **characterised in that** the collecting conveyor (13) circulates with continuous motion, at a conveying speed that is less than that of the inlet conveyor (12).

17. Collecting device according to claim 16, **characterised in that** downstream of the collecting conveyor (13, 113) there is arranged a packaging station (84, 141, 142) that receives the products to be packaged by said second collecting conveyor (13, 113) in a continuous manner.

18. Collecting device according to claim 1, **characterised in that** said positioning elements (114) in the non-operating position are arranged above the conveying the path.
